# EUROPEAN PATENT SPECIFICATION

(11) **EP 0 369 683 B1**
(45) Date of publication and mention of the grant of the patent: **24.05.1995**
(21) Application number: 89311628.5
(22) Date of filing: 09.11.1989
(51) Int. Cl.: C08L 67/06

(54) **Stable low styrene emission vinyl ester and unsaturated polyester resin compositions**
Stabile Mischungen mit geringem Verlust von Styren aus ungesättigten Polyestern und Vinylestern
Compositions stables de polyesters insaturés et d'esters vinyliques, à faible dégagement de styrène

(30) Priority: 10.11.1988 GB 8826309
(43) Date of publication of application: 23.05.1990
(73) Proprietor: THE DOW CHEMICAL COMPANY, Midland, Michigan 48640 (US)
(72) Inventor: Liedtke, Rolf Friedrich, D-7570 Baden-Baden (DE)
(74) Representative: Raynor, John

(56) References cited:
- DE-A- 2 554 930
- GB-A- 2 052 545

## Description

Vinyl ester resins and unsaturated polyester resins are industrially important in the manufacture of reinforced plastic components, boat hulls, fireproof molded articles, linings, paints, coating compositions, tanks, vessels, scrubbers, smoke stacks, pipe linings and other composite materials. Where superior toughness and corrosion resistance is desired, the more resistant vinyl ester resins are generally employed. These resins are generally prepared and mixed with a polymerizable monomer such as styrene, in order to reduce their viscosity. When cured, the styrene becomes a part of the resin system to produce a rigid cross-linked structure with desirable properties.

The presence of large amounts of styrene in such resin compositions results in the emission of styrene vapors into the work atmosphere, which constitutes a hazard to workers. In view of this workplace hazard, certain threshold concentration limits for styrene vapor have been established in many countries. Several methods of reducing styrene emission are described in the literature. One such method, described by Nylander in US-A-No. 4,201,826, includes the addition of a film-forming material, such as a paraffin or hydrocarbon wax, to resin compositions in order to inhibit the vaporization of styrene. Paraffin or hydrocarbon waxes tend to migrate to the surface of the resin and serve as a film barrier which confine the styrene monomer within the resin.

While such systems successfully suppress the volatilization of styrene from the work atmosphere, laminates so prepared are deficient in their secondary bonding characteristics. For example, applications in which relatively thick reinforced plastic articles are produced, are generally prepared in several laminate passes with successive curings. Thus, one or more impregnated reinforced layers is applied and allowed to cure, followed by another series of applied reinforced layers, with further curing, etc. It is necessary that each successive layer forms a tight bond to the preceding layer. Paraffin and hydrocarbon waxes form surface films which are extremely useful in controlling styrene emissions. However, the wax surface films they produce effectively reduce adhesion. Therefore, it is not too surprising that they also impart a substantial loss in adhesive properties of the resin to the reinforcing medium, as well as to secondary bonds formed by multiple-pass laminations.

Various adhesion promoters are known to the art which improve the adhesion of resin mixtures to the reinforcing medium, as well as to resin laminates themselves, as in the case of multi-pass laminates. In general, however, these adhesion promoters are only partially soluble in styrene containing resin compositions, and soon separate upon standing to form bi-phasic mixtures. Accordingly, in many instances, adhesion promoters are added just prior to using the resin mixtures, in order to avoid their separating and floating to the top of the resin composition. It would be highly advantageous to be able to provide a complete resin system, containing the resin, styrene, wax and adhesion promoter, which has a low styrene emission, and which will not separate on standing.

The present invention stems from the discovery that when a copolymer of a maleic acid half ester of a polyethylene glycol and a monoalkenyl aromatic monomer is added to a mixture of a vinyl ester resin or an unsaturated polyester resin containing a polymerizable monomer such as styrene, a paraffin wax and an adhesion promoter, a stable resin composition is obtained that does not separate on standing.

The present invention provides a resin composition comprising:-
a. a vinyl ester resin or an unsaturated polyester resin;
b. a polymerizable monomer, which is styrene, vinyl toluene, halostyrene, di-halostyrene, tri-halostyrene, tetra-halostyrene or an alpha substituted styrene;
c. a film forming wax material;
d. an adhesion promoter; and
e. a stabilizer which is a copolymer of a monoalkenyl aromatic monomer with a maleic acid half ester of a polyethylene glycol.

The vinyl ester resins that can be employed in accordance with the teachings of the present invention are prepared (1) by reacting a polyepoxide with an ethylenically unsaturated carboxylic acid to produce a reaction product which contains, in part, the functional group of the formula: 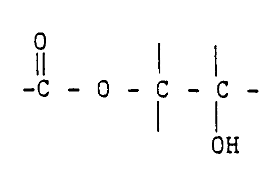
produced by the interaction of an epoxide group with a carboxylic acid group, or (2) by further condensation of the secondary hydroxyl groups contained in the above reaction product with a dicarboxylic acid anhydride to produce pendant half ester groups. The resulting vinyl ester resins can be admixed with a polymerizable monomer containing a >C=CH₂ group. In the first stage of the resin preparation, the polyepoxide is added in an amount sufficient to provide from 0.8 to 1.2 equivalents of epoxide per equivalent of carboxylic acid. If desired, the further condensation of the secondary hydroxyl groups is completed by the addition of a dicarboxylic acid anhydride to form pendant half ester groups with the secondary alcohol group generated from the epoxide-carboxylic acid reaction. The proportion of this added dicarboxylic acid anhydride can be varied to convert any or all of the secondary hydroxyl groups to pendant half ester groups.

Ethylenically unsaturated carboxylic acids suitable for reaction with the polyepoxide include α,β-unsaturated monocarboxylic acids and hydroxyalkyl acrylate or methacrylate half esters of dicarboxylic acids. The α,β-unsaturated monocarboxylic acids include such acids as acrylic acid, methacrylic acid, crotonic acid and cinnamic acid. The hydroxylalkyl group of the acrylate or methacrylate half esters preferably may contain from two to six carbon atoms and includes, for example, hydroxyethyl, beta-hydroxy-propyl and beta-hydroxybutyl. It is also intended to include those hydroxyalkyl groups containing an ether oxygen. The dicarboxylic acids include phthalic acid, chlorendic acid, tetrabromophthalic acid, adipic acid, succinic acid, glutaric acid, maleic acid, fumaric acid, citraconic acids, itaconic acid, halogenated maleic, fumaric acids and mesaconic acid. Mixtures of saturated and ethylenically unsaturated dicarboxylic acids can be employed.

The half esters preferably employed are prepared by reacting substantially equal molar proportions of a hydroxyalkyl acrylate or methacrylate with a dicarboxylic acid anhydride. The anhydrides that can be employed include maleic anhydride, citraconic anhydride, itaconic anhydride, phthalic anhydride, tetrabromophthalic anhydride and chlorendic anhydride. Advantageously, a polymerization inhibitor such as methyl ether of hydroquinone or hydroquinone, may be added inasmuch as elevated temperatures are useful in preparing the half esters.

Any of the known polyepoxides can be employed in the preparation of the vinyl ester resins of this invention. Useful polyepoxides are glycidyl polyethers of both polyhydric alcohols and polyhydric phenols, epoxy novolacs, elastomer modified epoxides, halogenated epoxides, epoxidized fatty acids or drying oil acids, epoxidized diolefins, epoxidized di-unsaturated acid esters, epoxidized unsaturated polyesters and mixtures thereof, as long as they contain more than one epoxide group per molecule. The polyepoxides may be monomeric or polymeric in nature. Suitable polyepoxides are disclosed in Lee and Neville, Handbook of Epoxy Resins, Chapter 2, McGraw Hill, New York (1967).

The preferred polyepoxides include, for example, glycidyl polyethers of polyhydric alcohols or polyhydric phenols, having weights per epoxide group of 150 to 2,000. These polyepoxides are usually made by reacting at least two moles of an epihalohydrin or glycerol dihalohydrin with one mole of the polyhydric alcohol or polyhydric phenol and a sufficient amount of caustic alkali to combine with the halogen of the halohydrin. The products are characterized by the presence of more than one epoxide group, i.e., a 1,2-epoxy equivalency greater than one.

Suitable dicarboxylic acid anhydrides for reaction with the secondary hydroxyl groups include phthalic anhydride, tetra-bromophthalic anhydride, chlorendic anhydride, maleic anhdyride, citraconic anhydride and itaconic anhydride.

A wide selection of polymerizable monomers containing a >C=CH₂ group is available from the many known classes of vinyl monomers. Examples of preferred polymerizable monomers are styrene, vinyl toluene, ortho-, meta, and parahalostyrenes, vinyl naphthalene, the various alpha-substituted styrenes, as well as the various di-, tri- and tetra-halostyrenes and acrylic, methacrylic and crotonic acid esters, which include both the saturated alcohol esters and the hydroxyalkyl esters. Styrene is the most preferred copolymerizable monomer. Generally, the polymerizable monomer is present in amounts ranging from 20 to 60 weight percent of the vinyl ester resin composition depending upon the particular properties desired.

In the preparation of the vinyl ester resins, various inhibitors and catalysts may be used. Any of the well known vinyl polymerization inhibitors such as hydroquinone or the methyl ether of hydroquinone, can be used. Additionally, the reaction of the polyepoxide with the carboxylic acid may be conducted either in the presence or absence of a catalyst such as alcoholates or tertiary-amino phenols.

The preferred vinyl ester resins employed in the practice of the present invention are the DERAKANE™ (trademark of The Dow Chemical Company) vinyl ester resins. Even more preferred is the general purpose resin known as DERAKANE 411-45 vinyl ester resin, which contains approximately 45 percent monomeric styrene. Other DERAKANE vinyl ester resins that can be employed, for example, include: DERAKANE 411-C-50 vinyl ester resin, containing approximately 50 percent monomeric styrene; DERAKANE 470-36 vinyl ester resin, containing approximately 36 percent monomeric styrene; DERAKANE 470-30 vinyl ester resin, containing approximately 30 percent monomeric styrene; DERAKANE 510-A-40 vinyl ester resin, a brominated vinyl ester resin containing approximately 40 percent monomeric styrene; DERAKANE 790 vinyl ester resin, containing approximately 45 percent monomeric styrene; and DERAKANE 8084 vinyl ester resin, a flexibilized vinyl ester resin containing approximately 40 percent monomeric styrene.

Unsaturated polyester resins used in reinforced plastic are well-known to the art. Generally, they are prepared by reacting ethylenically unsaturated dibasic acids with dihydric alcohols and dissolving the resulting mixture in a reactive solvent. Examples of ethylenically unsaturated dicarboxylic acids are maleic acid, maleic anhydride, fumaric acid, citraconic, itaconic acids and nadic anhydride. Typical polyhydric alcohols that may be employed include glycols and glycol ethers such as ethylene glycol, propylene glycol, butylene glycol, diethylene glycol, dipropylene glycol, polyethylene glycol and polypropylene glycol.

These polyesters may also contain moieties derived from dicarboxylic acids which are not ethylenically unsaturated such as phthalic acid, terephthalic acid, adipic acid, succinic acid, mellitic acid, tetrahydrophthalic acid and halogenated phthalic acids.

Other unsaturated polyester resins employed in the practice of this invention include, for example, reaction products of monoethylenically unsaturated carboxylic acids with diols or diol precursors such as bisphenol-A or bisphenol-A diglycidyl ethers. In general, the unsaturated polyester resins are combined with a polymerizable monomer to form a low viscosity resin. The polymerizable monomer generally comprises a copolymerizable ethylenically unsaturated monomer, predominantly styrene, although other polymerizable monomers can be employed such as vinyl toluene, divinyl benzene, alpha methyl styrene, orthochloro styrene, acrylic acid, methacylic acid, maleate esters, acrylic esters and methacrylic esters. In general, polyester resins containing from 25 to 55 percent by weight of styrene and from 45 to 75 percent by weight of unsaturated polyester resin are favorably employed. Examples of the preferred unsaturated polyester resins employed in the present invention are unsaturated isophthalic polyester resins containing styrene as the copolymerizable monomer. A ratio of 1 part by weight of styrene to 2 parts by weight of resin is generally utilized.

In addition to the polymerizable ingredients hereinabove recited, vinyl ester resins and unsaturated polyester resins customarily may contain effective quantities of polymerization inhibitors such as quinones or catechols; polymerization promoters such as cobalt or vanadium salts; thixotropic agents such as fumed silica and modified fumed silica, carboxy cellulose; pigments; inert fillers such as silica, calcium carbonate, titanium dioxide, magnesium oxide; and fibrous reinforcing material such as randomly oriented glass fibers or woven glass fabrics.

The resin compositions of the present invention employ a film forming wax material comprising essentially a paraffin wax or a mixture thereof to reduce the emission of the polymerizable monomer such as styrene into the work environment. The preferred film forming wax materials employed include paraffin type waxes. Still more preferred are the ceresin waxes. Ceresin waxes are hydrocarbon waxes having a microcrystalline structure and comprising a mixture of long chain hydrocarbon molecules having branched and unbranched carbon chains. In the practice of the present invention, the ceresin waxes are preferred due to their greater efficiency in reducing emission of the polymerizable monomer such as styrene. The waxes and wax mixtures of the present invention have a melting point of 50°C to 95°C and a congealing point of 58°C to 85°C. At 100°C the viscosity of these waxes is from 3 to 4 mPa·s as measured with a Brookfield 18/60 viscometer. The penetration value at 25°C is 5 to 50 mm as measured by ASTM D-1321.

Other waxy materials, such as stearic acid, stearyl stearate, carnauba wax and montan wax can be employed in the practice of this invention, either per se or as mixtures thereof and/or with other paraffin waxes, in order to reduce volatilization of the polymerizable monomer such as styrene. Generally from 0.01 to 2 percent of a wax or waxy material is employed, based upon the weight of the vinyl ester or unsaturated polyester resin and polymerizable monomer employed. Preferably from 0.05 to 0.5 of a wax material such as ceresin wax is employed for finished resin compositions, either with or without adhesion promoters.

One of the drawbacks in using film forming wax materials in resin compositions is the undesirable reduction in adhesive bond strength that occurs between reinforcement materials and resin compositions containing such waxy materials. An adhesion promoter can be added to the present resin composition of the present invention in order to enhance adhesive bond strength. Adhesive bond strength can be qualitatively measured by examining the amount of fibers that are present in the break pattern of a resin laminate. In other words, when a force is applied which causes the laminate to break, the greater number of fibers that appear in the break surface, the greater is the resin adhesive bond strength. If on the other hand, the break surface is clean and cleaves generally parallel to the flat surface of the laminate, the resin adhesive bond strength is poor.

Various adhesion promoters are known which can be added to wax containing resins in order to improve their adhesive bond strength. Thus, for example, lanolin described in US-A-4,559,375; drying oils described in US-A-4,609,693; alkylaromatic, alkenylaromatic, alkolaromatic and alcohol compounds, described in EP-A-0 027 666; stearyl and lauryl methacrylates described in EP-A-0 008 216; and lauric acid/ally glycidyl ether reaction products described in EP-A-0 072 114, have all been favorably employed as adhesion promoters and can all be used in the practice of the present invention.

The preferred adhesion promoters employed in the practice of this invention include, for example, the class of alkyl esters of acrylic acid having the general formula: 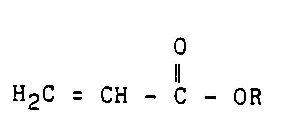
wherein R is a C₁ to C₁₆ alkyl or branched alkyl carbon chain; and copolymers thereof. Preferably, R is a C₄ to C₈ alkyl or branched alkyl chain. Still more preferred are the polyalkyl esters of acrylic acid such as polybutylacrylates and polyethylhexyacrylates. The use of these polyacrylate esters as adhesion promoters is fully described in US-A-4,619,953.

Although adhesion promoters effectively recapture some of the bond strength which is sacrificed by the addition of a film forming waxy material to resin compositions, most adhesion promoters suffer from the disadvantage that they are only partially soluble in resin mixtures containing styrene and will separate on standing. Thus, adhesion promoters are often added just prior to use, and mixed into resin containing styrene mixtures together with activating catalysts and any other excipients that may be employed. This is not always conveniently done at the job site. Thus, it would be highly desirable to have a resin composition containing all of the ingredients, with the exception of the activating catalyst, that could be pre-mixed by a resin manufacturer or supplier, and that would be storage stable and not separate on standing.

In the practice of the present invention, a stabilizer which is a copolymer of maleic acid half ester of a polyethylene glycol with a monoalkenyl aromatic monomer is added to the resin composition to obtain a stable resin mixture which is storage stable and which will not separate on standing.

More particularly, the copolymers comprise 0.5 to 2 moles of the maleic acid half ester per 100 moles of the aromatic monomer. The molecular weight can be varied by changing the catalyst level (molecular weight decreases as catalyst level increases) and/or by changing the polymerization temperature (increasing the temperature decreases the molecular weight). The copolymers preferably have an average molecular weight of at least 15,000 and can be as high as 50,000. A preferred molecular weight range of the copolymers is from 18,000 to 30,000. The preferred glycol employed is a polyethylene glycol having an average molecular weight between 1450 and 6000. The monoalkenyl aromatic monomers employed are well known and include styrene, vinyl toluene, t-butyl styrene and α-methyl styrene. In general, styrene is utilized. These copolymers were originally developed to lower the viscosity of low profile bulk and sheet molded articles, and are fully described in US-A-3,947,422. Preferred is a copolymer having an average molecular weight of 29,000, comprising a maleic acid half ester of polyethylene glycol with an average molecular weight of 4000 and styrene.

The stabilizers can be added to such resin compositions in amounts ranging from 0.05 to 5 percent based upon the total resin compositions. Preferably, amounts of stabilizer ranging from 0.1 to 1.0 percent of the total resin mixture are favorably employed.

It is obvious that the stabilizers need not be added solely to the finished resin system. The stabilizers can also be added to various components of the resin system or pre-mixes which can then be added, with or without dilution, to the remaining components to form the final resin compositions. For example the stabilizer, adhesion promoter and film forming wax material can be supplied as a pre-mix for addition to both a vinyl ester or an unsaturated polyester resin in combination with a polymerizable monomer. Alternatively, the stabilizer and film forming wax material, or stabilizer and adhesion promoter, can be dissolved in a solvent such as styrene, and separately supplied as a stabilizing pre-mix solution for addition to vinyl ester or unsaturated polyester resin systems. Such combinations merely reflect alternative methods for the utilization of this invention, which would be easily understood by those skilled in the art, and which are deemed to be fully within the scope of the invention claimed.

Other materials such as low profile additives, polymerization inhibitors, curing accelerators, mold release agents, polymerization catalysts or catalyst initiator packages can be added to such compositions.

The invention described and claimed herein is more particularly illustrated in conjunction with the following examples.

In the following Tables,
- Resin A means: NORSODYNE™ G-703 unsaturated isophthalic polyester resin (trademark of CdF Chemi);
- Resin B means: DERAKANE 411-45 vinyl ester resin;
- Resin B′ means: DERAKANE 411-43 vinyl ester resin;
- Resin C means: DERAKANE 470-36 vinyl ester resin;
- Resin D means: LEGJVAL™ W25 unsaturated isophthalic polyester resin (trademark of Bayer);
- Stabilizer A means: a copolymer prepared in accordance with Example 1; and

### Example 1

This example illustrates a method for preparing the preferred copolymer stabilizer of this invention. Maleic acid half ester was prepared by reacting one mole of maleic anhydride with one mole of a polyglycol having an average molecular weight of 4000 (E-4000). The glycol was first dried by azeotropically removing the water with toluene. The reaction was conducted under a nitrogen pad for 1.5 to 3 hours at 100°C to 110°C. When the acid content ceased to decline, the half ester preparation was completed. The resulting half ester was in a 25 percent solution in toluene.

The copolymer was prepared in a suitable reactor by charging 82 g of the half ester solution, 208.3 g of styrene and 208.3 g of toluene. After heating to 100°C, 2.1 g of benzoyl peroxide (98 percent) was added, and heating continued and controlled at between 110°C and 115°C for 1 hour. An additional 82 g of half ester solution was added and digested for another 30 minutes at this temperature. The toluene was stripped off by an air purge which helped to stop any further polymerization. When the reactor temperature reached 140°C the air purge was stopped and a vacuum applied to remove traces of toluene, etc. The reaction temperature was lowered to 120°C at which time the copolymer was able to be diluted with 677 g of styrene (inhibitor added) for subsequent addition to the vinyl ester resin. The copolymer so produced was prepared from a total of 0.02 moles of the half ester and 2 moles of styrene, and had a weight average molecular weight of 29,000.

### Example 2

The following example describes the stabilizing effect of the stabilizing agent upon vinyl ester and polyester resin compositions.

The resin compositions shown in Table 1 were weighed into a container, heated to approximately 65°C to 70°C, mixed to form a homogeneous suspension, allowed to cool and placed on a shelf where they remained undisturbed at a temperature of 25°C. The samples were inspected daily for a minimum of ten days. The first evidence of bi-phasic separation was taken as an endpoint of stability.

**Table 1**

| Components | Amounts (g) | | | | | |
|---|---|---|---|---|---|---|
| Resin A | 99.4 | 98.9 | | | | |
| Resin B | | | 95.0 | 95.0 | 99.4 | 98.9 |
| Ceresin Wax (mp 60 to 65°C | 0.1 | 0.1 | 0.1 | 0.1 | 0.1 | 0.1 |
| Polybutylacrylate | 0.5 | 0.5 | 0.5 | 0.5 | 0.5 | 0.5 |
| Stabilizer A | - | 0.5 | - | 0.5 | - | 0.5 |
| Phase Stability (days ) at 25°C | 2 | 8 | <1 | >20 | | |
| Phase Stability (days) at 55°C | | | <1 | >7 | <1 | >5 |

### Example 3

Following the same procedure as in Example 2, but varying the concentration of the stabilizing agent, the following results were observed:

**Table 2**

| Components | Amounts (g) | | | |
|---|---|---|---|---|
| Resin B | 99.3 | 98.8 | 98.3 | 97.8 |
| Ceresin Wax (mp 60 to 65°C | 0.2 | 0.2 | 0.2 | 0.2 |
| Polybutylacrylate | 0.5 | 0.5 | 0.5 | 0.5 |
| Stabilizer A | - | 0.5 | 1.0 | 1.5 |
| Phase Stability (days ) at 25°C | <1 | >10 | >10 | >10 |

### Example 4

The stabilizing effect of the composition as shown in Table 3 can also be demonstrated by means of an accelerated test method.

An 83 mm long test tube, having a diameter of 12 mm is filled with 73 mm of the resin suspension and centrifuged at 4000 rpm for 4 hours. The separation of the upper layer, if any, was measured in millimeters. The results are as shown in Table 3.

**Table 3**

| Components | Amounts (g) | | | |
|---|---|---|---|---|
| Resin B′ | 99.4 | 98.8 | | |
| Resin C | | | 95.0 | 95.0 |
| Ceresin Wax (mp 60 to 65°C | 0.1 | 0.1 | 0.1 | 0.1 |
| Polybutylacrylate | 0.5 | 0.5 | 0.5 | 0.5 |
| Stabilizer A | - | 0.5 | - | 0.5 |
| Phase Separation (mm) | 1.0 | 0 | 0.5 | 0 |

### Example 5

Following the same procedure as in Example 4, but varying the concentration of the stabilizing agent, the following results were obtained:

**Table 4**

| Components | Amounts (g) | | |
|---|---|---|---|
| Resin B | 99.3 | 98.9 | 94.4 |
| Ceresin Wax (mp 60 to 65°C | 0.1 | 0.1 | 0.1 |
| Polybutylacrylate | 0.5 | 0.5 | 0.5 |
| Stabilizer A | 0.1 | 0.5 | 5.0 |
| Phase separation (mm) | 0.1 | 0 | 0 |

### Example 6

The following example illustrates that styrene emissions are not increased by the addition of a stabilizer to a wax containing vinyl ester or unsaturated polyester resin compositions containing adhesion promoters.

The test procedure involved pouring 200 g of the resin composition into a circular galvanized steel plate having a diameter of 240 mm and a depth of 7 mm. The disk was placed on a balance with a resolution of ± 0.01 g. To avoid faulty readings due to air turbulance, the balance was placed in a closed fume cabinet. The loss in weight was determined after 15 minutes and calculated as weight loss in grams per square meter. The temperature was maintained constant within the range of 22°C to 24°C. The results are as shown in Table 5.

**Table 5**

| Components | Amounts (g) | | | | | |
|---|---|---|---|---|---|---|
| Resin B | 100 | 99.725 | 99.675 | 99.525 | 98.725 | 95.725 |
| Ceresin Wax (mp 60 to 65°C | - | 0.075 | 0.075 | 0.075 | 0.075 | 0.075 |
| Polybutylacrylate | | 0.2 | 0.2 | 0.2 | 0.2 | 0.2 |
| Stabilizer A | - | - | 0.05 | 0.2 | 1.0 | 4.0 |
| Styrene emission (g/m²) | 20 | 14.2 | 12.5 | 14.2 | 15.9 | 15.4 |

### Example 7

The following example illustrates that other properties such as interlaminar shear strength are not adversely effected by the particular stabilizer used in the present invention.

An eight layer laminate containing approximately 30 percent glass fiber and 70 percent resin mixture was prepared. One hundred grams of the composition tested was cured with 0.3 g of cobalt octoate (6 percent), 0.1 g of dimethylaniline and 1.5 g of methyl ethyl ketone peroxide (50 percent). The interlaminar shear strength was measured in accordance with ASTM D 2344. The following results were obtained for a vinyl ester resin formulation that did not contain an adhesion promoter, following a 45 hours cure at room temperature. The results are as shown in Table 9.

**Table 7**

| Components | Amounts (g) | |
|---|---|---|
| Resin B² | 100 | 99.4 |
| Ceresin Wax (mp 60 to 65°C) | - | 0.1 |
| Stabilizer³ | - | 0.5 |
| Interlaminar shear strength (Mpa) | 22.3 | 21.0 |

Following essentially the same procedure as above, but adding an adhesion promoter, the following results were obtained:

**Table 8**

| Components | Amounts (g) | |
|---|---|---|
| Resin B | 100 | 98.9 |
| Ceresin Wax (mp 60 to 65°C | - | 0.1 |
| Polybutylacrylate | | 0.5 |
| Stabilizer A | - | 0.5 |
| Interlaminar shear strength (Mpa) | 22.3 | 22.1 |

Following essentially the same procedure as above, but substituting an unsaturated polyester resin for the vinyl ester resin, the following results were obtained:

**Table 9**

| Components | Amounts (g) | |
|---|---|---|
| Resin E A | 100 | 98.9 |
| Ceresin Wax (mp 60 to 65°C | - | 0.1 |
| Polybutylacrylate | | 0.5 |
| Stabilizer A | - | 0.5 |
| Interlaminar shear strength (Mpa) | 18.1 | 20.9 |

## Claims

1. A resin composition comprising:-
a. a vinyl ester resin or an unsaturated polyester resin;
b. a polymerizable monomer, which is styrene, vinyl toluene, halostyrene, di-halostyrene, tri-halostyrene, tetra-halostyrene or an alpha substituted styrene;
c. a film forming wax material;
d. an adhesion promoter; and
e. a stabilizer, characterised in that the stabilizer is a copolymer of a monoalkenyl aromatic monomer with a maleic acid half ester of a polyethylene glycol.

2. A composition according to Claim 1, wherein the film forming wax material is a paraffin wax or a mixture of paraffin waxes.

3. A composition according to Claim 1 or Claim 2, wherein the adhesion promoter is polybutylacrylate.

4. A method of stabilizing a resin composition comprising
a vinyl ester or unsaturated polyester resin,
a polymerizable monomer which is styrene, vinyl toluene, halostyrene, di-halostyrene, tri-halostyrene, tetra-halostyrene or an alpha substituted styrene, a film-forming wax material, and
a adhesion promoter,
which method comprises incorporating in the said resin composition from 0.05 to 5 percent by weight based on the composition of a stabilizing agent which is a copolymer of a monoalkenyl aromatic monomer with a maleic acid half ester of a polyethylene glycol.

5. A method of forming a resin composition, which method comprises blending components a, b, c, d, and e, as defined in any one of claims 1 to 3.

## Patentansprüche

1. Harzzusammensetzung enthaltend
a) ein Vinylesterharz oder ein ungesättigtes Polyesterharz,
b) ein polymerisierbares Monomer, das Styrol, Vinyltoluol, Halostyrol, Di-halostyrol, Tri-halostyrol, Tetra-halostyrol oder ein alpha-substituiertes Styrol ist,
c) ein filmbildendes Wachsmaterial,
d) einen Haftvermittler und
e) einen Stabilisator,
**dadurch gekennzeichnet,**
daß der Stabilisator ein Copolymer eines monoalkenylaromatischen Monomeren mit einem Maleinsäurehalbester eines Polyethylenglycols ist.

2. Harzzusammensetzung nach Anspruch 1,
**dadurch gekennzeichnet**,
daß das filmbildende Wachsmaterial ein Paraffinwachs oder eine Mischung von Paraffinwachsen ist.

3. Harzzusammensetzung nach Anspruch 1 oder 2,
**dadurch gekennzeichnet**,
daß der Haftvermittler Polybutylacrylat ist.

4. Verfahren zum Stabilisieren einer Harzzusammensetzung, enthaltend ein Vinylesterharz oder ein ungesättigtes Polyesterharz, ein polymerisierbares Monomer, das Styrol, Vinyltoluol, Halostyrol, Di-halostyrol, Tri-halostyrol, Tetra-halostyrol oder ein alpha-substituiertes Styrol ist, ein filmbildendes Wachsmaterial und einen Haftvermittler, durch Einbringen von 0,05 bis 5 Gew.-%, bezogen auf Gewicht der Zusammensetzung, eines Stabilisators in die Harzzusammensetzung, wobei der Stabilisator ein Copolymer eines monoalkenylaromatischen Monomeren mit einem Maleinsäurehalbester eines Polyethylenglycols ist.

5. Verfahren zum Ausbilden einer Harzzusammensetzung durch Mischen der Bestandteile a, b, c, d und e, wie in einem der Ansprüche 1 bis 3 angegeben.

## Revendications

1. Composition de résine comprenant :
a) une résine d'ester vinylique ou une résine de polyester insaturé,
b) un monomère polymérisable qui est du styrène, du vinyltoluène, un halogénostyrène, un dihalogénostyrène, un trihalogénostyrène, un tétrahalogénostyrène ou un styrène alpha-substitué,
c) une substance cireuse filmogène,
d) un promoteur d'adhésion, et
e) un stabilisant,
caractérisée en ce que le stabilisant est un copolymère d'un monomère alcényl-aromatique et d'un semi-ester d'acide maléique et de polyéthylèneglycol.

2. Composition conforme à la revendication 1, dans laquelle la substance cireuse filmogène est une cire paraffinique ou un mélange de cires paraffiniques.

3. Composition conforme à la revendication 1 ou 2, dans laquelle le promoteur d'adhésion est un poly(acrylate de butyle).

4. Procédé de stabilisation d'une composition de résine comprenant une résine d'ester vinylique ou une résine de polyester insaturé, un monomère polymérisable qui est du styrène, du vinyltoluène, un halogénostyrène, un dihalogénostyrène, un trihalogénostyrène, un tétrahalogénostyrène ou un styrène alpha-substitué, une substance cireuse filmogène et un promoteur d'adhésion, lequel procédé comporte le fait d'incorporer, dans ladite composition de résine, de 0,05 à 5 % en poids, par rapport à la composition, d'un agent stabilisant qui est un copolymère d'un monomère alcényl-aromatique et d'un semi-ester d'acide maléique et de polyéthylèneglycol.

5. Procédé d'obtention d'une composition de résine, lequel procédé comporte le fait de mélanger les composants (a), (b), (c), (d) et (e) définis dans l'une des revendications 1 à 3.
